# EUROPEAN PATENT APPLICATION

(11) **EP 2 247 143 A1**
(43) Date of publication of application: **03.11.2010**
(21) Application number: 08871599.0
(22) Date of filing: 26.12.2008
(51) Int. Cl.: H04W 40/12, H04B 7/15, H04W 72/12, H04W 84/18, H04W 88/02

(54) **RELAY TRANSMISSION SYSTEM, BASE STATION, RELAY STATION, AND METHOD**

(30) Priority: 25.01.2008 JP 2008015494
(71) Applicant: NTT DoCoMo, Inc., Chiyoda-ku Tokyo 100-6150 (JP)
(72) Inventor: HIGUCHI, Kenichi, Tokyo 100-6150 (JP)
(74) Representative: HOFFMANN EITLE
(86) International application number: PCT/JP2008/073722
(87) International publication number: WO 2009/093406

(57) **Abstract**

A base station used in a relay transmission system is disclosed. The base station includes a metric provision unit providing a metric indicating radio propagation conditions of a user equipment terminal; a relay information generation unit generating a relay information for the user equipment terminal based on the metric, the relay information indicating whether an uplink signal is to be transmitted via one or more relay stations; a scheduling unit generating an allocation plan of radio resources based on the relay information; and a control signal transmission unit transmitting a control signal including a scheduling information indicating the allocation plan.

## Description

### TECHNICAL FIELD

The present invention generally relates to a relay transmission system, and a base station, a relay station, and a method used in the relay transmission system.

### BACKGROUND ART

In research and development of a mobile communication system, it is important to increase the data rate and improve the use efficiency of radio resources (especially, frequency). When assuming that the required received quality (e.g., received SINR (Signal to Interference plus Noise Ratio)) should be constant, one method of increasing the data rate is to increase the transmission power so as to allow for higher data rates. However, this method may not be preferable from the viewpoint of reducing the power consumption because the power consumption is likely to increase with the increase of the transmission power. In particular, this method may not be suitable for a mobile terminal that has only a small battery. One method of increasing the data rate without changing the maximum transmission power is to increase the allocation density of the base stations so as not to excessively increase the path loss between the user equipment (UE) terminals and the base station (namely, to reduce the cell radius of the base station). However, this method of increasing the allocation density of the base stations may not be preferable because the cost to build this system becomes high.

On the other hand, to improve the use efficiency of the radio resources (especially, frequency), it may be required to reduce the interference power. This is because when much interference occurs in a specific frequency, communications may not be practically performed using the specific frequency. Therefore, it may be required to reduce the interference to secure as many usable frequencies as possible. In this regard, recently, more and more attention has been paid to a relay transmission system.

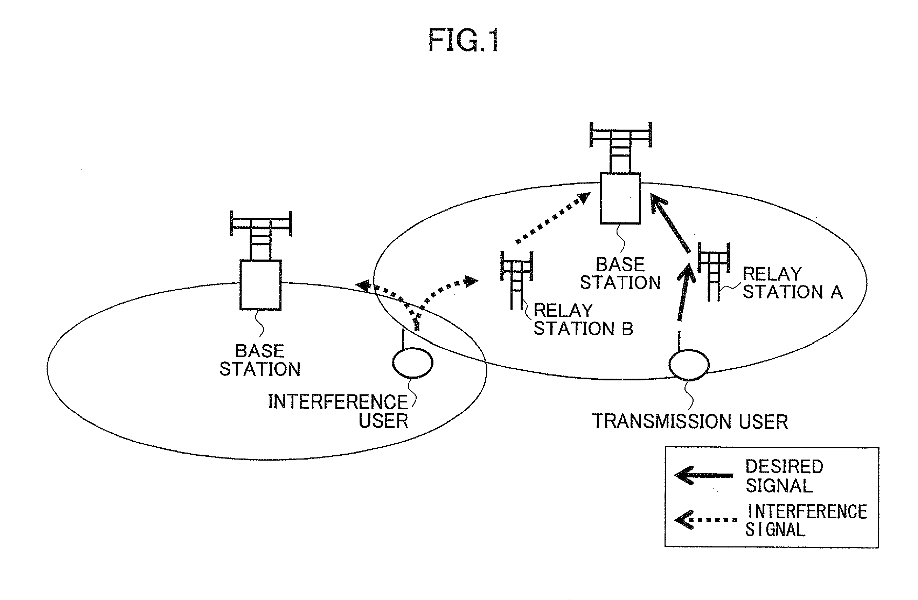

FIG. 1 schematically shows an example of the relay transmission system. As shown in FIG 1, in a typical relay transmission system, in addition to the base station and a mobile station (typically, a user equipment (UE) terminal), there is provided a relay station within a cell. FIG. 1 shows a case where the mobile station (described as "transmission user" in FIG. 1) is located at the edge of the cell. In this case, when the "transmission user" transmits an uplink signal directly to the base station of the cell, the uplink signal from the "transmission user" may have to be transmitted using higher transmission power than that of the uplink signal transmitted from a mobile station located near the base station. However, in the relay transmission system of FIG. 1, there is a "relay station A" located between the "transmission user" and the base station. The relay station may also be called, for example, a boosting station, a repeater station or the like. When the uplink signal from the "transmission user" is received by the base station via the "relay station A", the "transmission user" may transmit the uplink signal using less transmission power so as to deliver the uplink signal to the "relay station A". As a result, the transmission power of the uplink signal from the "transmission user" may be reduced. From the viewpoint of the operating principle, the "relay station A" may be a mobile station or a fixed station; however, herein, it is assumed that the "relay station A" is a fixed station. Unlike the base station, the relay station may have only a function of relaying a signal. Because of this simplicity, generally, the relay stations may be easily installed at lower cost when compared with the base stations. Such a relay transmission system is described in, for example, Non-Patent Document 1.

There may be several relay transmission methods. However, those relay transmission methods may be broadly classified into two types of methods: a DF (Decode and Forward) method and an AF (Amplify and Forward) method.

In the DF method, the uplink signal transmitted from a user equipment (UE) terminal and received by a relay station is first demodulated and decoded, and then encoded and modulated in the relay station to be further transmitted as the uplink signal. Since the uplink signal is first decoded in the relay station, the interference and noise may be removed at the relay station. As a result, the base station may receive the uplink signal which is less affected by the interference and noise. Because of this feature, as long as the demodulation and decoding are correctly performed, quite higher transmission quality may be obtained by the base station. Further, when the relay station encodes the transmission signal using a different coding method from the coding method used in the received signal, the base station may receive plural signals encoded by using different (plural) coding methods applied to the same original signal. If this is the case, the diversity effect may be obtained from the viewpoints of the different coding methods and the propagation paths. These features may be the advantages of the DF methods.

However, in the DF method, it is required to perform demodulation, decoding, encoding, and modulation at each relay. Because of this feature, the propagation delay may become quite long. Unfortunately, this delay is so fatal that the DF method is hardly employed in a practical relay transmission system. Further, in a signal transmission of real-time data, voice packet data (VoIP) and the like and in a fast data transmission based on TCP/IP, it is important to maintain the Round Trip Delay (RTD) as short as possible. Further, to rapidly and appropriately perform the demodulation, decoding, encoding, and modulation, the relay station must have sufficient signal processing capability, which may not be preferable from the viewpoint of easy multiple installations at low cost.

On the other hand, in the AF method, it is not necessary to perform the demodulation, decoding, encoding, and modulation on the uplink signal. This is because, according to the principle of the AF method, the relay station simply amplifies the received signal and only transmits the amplified signal without changing the signal as performed in the DF method. Because of this feature, the AF method may have an advantage over the DF method in that long transmission delay and the cost increase are unlikely to occur due to the principle of the AF method.

Non-Patent Document 1: A. Nostatinia, T. E. Hunter, and A. Hedayat, "Cooperative Communication in Wireless Networks," IEEE Communications Magazine, Vol.42, No.10, pp.74-80, Oct. 2004.

### DISCLOSURE OF INVENTION

### PROBLEMS TO BE SOLVED BY THE INVENTION

However, in the AF method, the received signal is not demodulated nor decoded; therefore, it is difficult to determine whether the received signal is a desired signal. As a result, not only the desired signal but also an interference signal may be directly amplified and transferred to the base station. Because of this feature, the received quality of the uplink signal may be degraded at the base station. When the AF method is applied in the case shown in FIG. 1, the relay station A may appropriately amplify the desired signal from the transmission user and transfer the received desired signal to the base station. However, on the other hand, the relay station B may amplify the interference signal from the interference user and transfer the received interference signal to the base station. As a result, the received quality of the desired signal from the transmission user may be degraded.

Further, whichever method (i.e., the DF method or the AF method) is used to relay the signal, the number of the radio resources available to be used may be halved. This is because the same radio resources cannot be used for both the receiving and transmitting the signal to be relayed. Because of this feature, for example, it is required to use different frequencies or time slots between the reception and transmission of the signal. As a result, when the relay is uniformly performed in the entire cell, even the user equipment (UE) terminal near the base station may be able to use only the half of the radio resources, which may not be preferable from the viewpoint of effective use of the resources.

An object of the present invention is to improve the uplink signal quality and the use efficiency of radio resources in a relay transmission system including a user equipment (UE) terminal, and a base station and a relay station that are in communication with the user equipment (UE) terminal.

### MEANS FOR SOLVING THE PROBLEMS

According to an aspect of the present invention, there is provided a relay transmission system including one or more user equipment (UE) terminals, one or more relay stations, and a base station. The base station includes a metric provision unit providing a metric indicating radio propagation conditions of a user equipment (UE) terminal; a relay information generation unit generating relay information for each user equipment (UE) terminal based on the metric, the relay information indicating whether an uplink signal is to be transmitted via one or more relay stations; a scheduling unit generating an allocation plan of radio resources based on the relay information; and a control signal transmission unit transmitting a control signal including scheduling information indicating the allocation plan. At least one relay station includes a receiving unit receiving an uplink signal from a user equipment (UE) terminal; an amplification unit amplifying the uplink signal based on an instruction signal; a transmission unit transmitting the uplink signal in uplink, the uplink signal having been amplified by the amplification unit; a demodulation unit receiving and demodulating a control signal including scheduling information of uplink radio resources; and an instruction signal generation unit generating the instruction signal by determining whether the uplink signal is required to be relayed for the user equipment (UE) terminal based on the control signal. Further, the instruction signal indicates whether the uplink signal is to be amplified depending on whether the uplink signal is required to be relayed.

### ADVANTAGEOUS EFFECT OF THE INVENTION

According to an embodiment of the present invention, it may become possible to improve the signal quality in uplink and the use efficiency of radio resources in a relay transmission system including a user equipment (UE) terminal, and a base station and a relay station that are in communication with the user equipment (UE) terminal.

### BRIEF DESCRIPTION OF THE DRAWINGS

FIG. 1 is a schematic drawing showing an example of a relay transmission system;
FIG. 2 is a flowchart showing an exemplary operation according to an embodiment of the present invention;
FIG. 3 is a flowchart showing a process of generating relay information;
FIG. 4 is a partial functional block diagram of a base station according to an embodiment of the present invention; and
FIG. 5 is a partial function block diagram of a relay station according to an embodiment of the present invention.

### EXPLANATION OF REFERENCES

- 41:: UPLINK CHANNEL CONDITION MEASUREMENT SECTION
- 42:: UPLINK CONTROL CHANNEL RECEIVING SECTION
- 43:: RELAY INFORMATION GENERATION SECTION
- 44:: SCHEDULER
- 45:: DOWNLINK CONTROL SIGNAL GENERATION SECTION
- 46:: RELAY STATION CONTROL SIGNAL GENERATION SECTION
- 47:: BASEBAND SIGNAL GENERATION SECTION
- 48:: RF SIGNAL GENERATION SECTION
- 51:: DOWNLINK CONTROL SIGNAL RECEIVING SECTION
- 52:: RELAY AMPLIFICATION FACTOR CONTROL SECTION
- 53:: UPLINK SIGNAL RECEIVING SECTION
- 54:: FREQUENCY CONVERSION SECTION
- 55:: AMPLIFIER
- 56:: UPLINK SIGNAL TRANSMISSION SECTION

### BEST MODE FOR CARRYING OUT THE INVENTION

According to an aspect of the present invention, there is provided a base station used in a relay transmission system. The base station includes a metric provision unit providing a metric indicating radio propagation conditions of a user equipment (UE) terminal; a relay information generation unit generating relay information for the user equipment (UE) terminal based on the metric, the relay information indicating whether an uplink signal is to be transmitted via one or more relay stations; a scheduling unit generating an allocation plan of radio resources based on the relay information; and a control signal transmission unit transmitting a control signal including scheduling information indicating the allocation plan.

By having this configuration, the relay information indicating whether the uplink signal is to be relayed by one or more relay stations may be generated for the user equipment (UE) terminal based on the metric (such as the CQI (Channel Quality Indicator), SINR or the like). Further the relay information may be included in the control signal. By having this feature, the relay station may be able to explicitly determine whether the relay station is to relay the uplink signal. As a result, adequate relays may be performed. This may be preferable from the viewpoints of improving the signal quality when the relays are performed and the use efficiency of resources.

Further, the metric may be derived from a received quality of a reference signal transmitted in downlink. Further, from the viewpoint of observing the instantaneous radio propagation conditions, the metric may be derived from a received quality of a reference signal transmitted from the user equipment (UE) terminal.

From the viewpoint of measuring not only the radio propagation conditions between the base station and the user equipment (UE) terminal but also the radio propagation conditions between the relay station and the user equipment (UE) terminal, the metric may include both a base station metric and a relay station metric, the base station metric being derived from a received quality of a reference signal transmitted from the base station, the relay station metric being derived from a received quality of a reference signal transmitted from the relay station.

From the viewpoint of simply determining whether the relay is required to be performed, whether an uplink signal from the user equipment (UE) terminal is to be relayed may be determined depending on whether the base station metric is equal to or greater than a predetermined value.

Further, a path loss value between the relay station and the user equipment (UE) terminal may be measured, and the relay information may be generated in a manner such that the uplink signal is to be relayed by a relay station having a minimum path loss value. This configuration may be preferable from the viewpoint of selecting the relay station which is the closest to the user equipment (UE) terminal from among plural relay stations.

Further, the relay information may be generated in a manner such that the uplink signal is to be relayed by one or more relay stations having a path loss value equal to or less than a predetermined value. This configuration may be preferable from the viewpoint of selecting one or more relay stations which are closer to the user equipment (UE) terminal from among one or more relay stations.

Further, from the viewpoint of amplifying the uplink signal by using an appropriate amplification factor, the relay information may indicate that the relay station for relaying the uplink signal amplifies the uplink signal by using an amplification factor determined in accordance with the path loss value between the relay station and the user equipment (UE) terminal. Otherwise, the relay information may indicate that the relay station for relaying the uplink signal amplifies the uplink signal by using an amplification factor proportional to a reciprocal of a received power value of the uplink signal.

According to an aspect of the present invention, there is provided a method used in a base station in a relay transmission system. The method includes a metric providing step of providing a metric indicating radio propagation conditions of a user equipment (UE) terminal; a relay information generating step of generating relay information for the user equipment (UE) terminal based on the metric, the relay information indicating whether an uplink signal is to be transmitted via one or more relay stations; a scheduling step of generating an allocation plan of radio resources based on the relay information; and a control signal transmitting step of transmitting a control signal including scheduling information indicating the allocation plan.

According to an aspect of the present invention, there is provided a relay station used in a relay transmission system. The relay station includes a receiving unit receiving an uplink signal from a user equipment (UE) terminal; an amplification unit amplifying the uplink signal based on an instruction signal; a transmission unit transmitting the uplink signal in uplink, the uplink signal having been amplified by the amplification unit; a demodulation unit receiving and demodulating a control signal including scheduling information of uplink radio resources; and an instruction signal generation unit generating the instruction signal by determining whether the uplink signal is required to be relayed for the user equipment

(UE) terminal based on the control signal. Further, the instruction signal indicates whether the uplink signal is to be amplified depending on whether the uplink signal is required to be relayed. By having this configuration, it may become possible to determine whether the uplink signal is required to be relayed for the user equipment (UE) terminal. As a result, it may become possible to perform adequate (just enough) relays. This may be preferable from the viewpoints of improving the signal quality and the use efficiency of the resources.

Further, relay information may be included in the control signal, the relay information indicating whether an uplink signal is to be transmitted via one or more relay stations. Otherwise, whether the uplink signal from the user equipment (UE) terminal is required to be relayed may be determined based on how radio resources are allocated to the user equipment (UE) terminal.

Further, when the uplink signal is relayed, the uplink signal may be amplified by using an amplification factor determined based on a path loss value of the relay station.

Otherwise, when the uplink signal is relayed, the uplink signal may be amplified by using an amplification factor proportional to a reciprocal of a received power value of the uplink signal.

From the viewpoint of improving the signal quality, it may be preferable that directionality of an antenna for receiving the uplink signal be different from directionality of an antenna for transmitting the uplink signal.

According to an aspect of the present invention, there is provided a method used in a relay station in a relay transmission system. The method includes a receiving step of receiving an uplink signal from a user equipment (UE) terminal; an amplifying step of amplifying the uplink signal based on an instruction signal; and a transmitting step of transmitting the uplink signal in uplink, the uplink signal having been amplified in the amplifying step. Further, a control signal including scheduling information of uplink radio resources is received and demodulated. The instruction signal is generated by determining whether the uplink signal is required to be relayed for the user equipment (UE) terminal based on the control signal. The instruction signal indicates whether the uplink signal is to be amplified depending on whether the uplink signal is required to be relayed.

To promote an understanding of the present invention, the specific values are used as examples throughout the description. However, it should be noted that such specific values are just sample values unless otherwise described, and any other appropriate values may be used.

### Embodiment 1

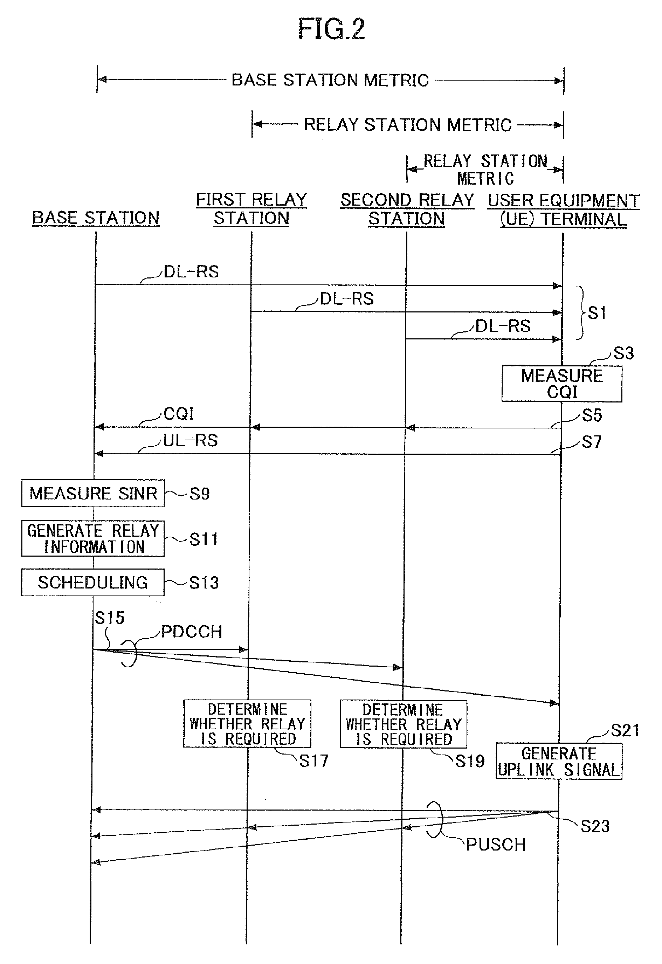

FIG. 2 is a flowchart showing an exemplary operation according to an embodiment of the present invention. In the following, for explanatory purposes, it is assumed that the relay transmission system includes one base station, a first relay station, a second relay station, and one user equipment (UE) terminal. However, the relay transmission system of the present invention is not limited to this configuration. For example, more or less than two relay stations may be included, and more than one user equipment (UE) terminal may be included in the relay transmission system.

First, in step S1, Downlink-Reference Signals (DL-RSs) are transmitted from the base station, the first relay station, and the second relay station to the user equipment (UE) terminal in downlink. The Downlink-Reference Signals (DL-RSs) may be pattern signals already known between the transmitting sides and the receiving side. The reference signal may also be referred to as a pilot signal, a training signal or the like. The Downlink-Reference Signals (DL-RSs) from the base station and the first and second relay stations may be determined so as to be orthogonal to each other in at least one of time, frequency, and code domains or so as not to be orthogonal to each other. From a viewpoint of measuring an average propagation loss, the Downlink-Reference Signal (DL-RS) may not be necessarily transmitted across a wide frequency range. Therefore, from the viewpoint of measuring an average propagation loss, the relay stations may transmit the Downlink-Reference Signals (DL-RSs) using a narrow bandwidth (in an extreme case, using only one sub-carrier). On the other hand, the base station may have to measure not only the propagation loss but also the instantaneous fading level and the like. Because of this necessity, the base station may transmit reference signals across the entire system frequency range.

Next, in step S3, the user equipment (UE) terminal receives the Downlink-Reference Signals (DL-RSs) from the base station and the first and second relay stations, and measures the received quality of the Downlink-Reference Signals (DL-RSs). As the received quality, any appropriate amount may be measured (used) such as the SINR, Ec/No (Energy per Chip-to-Total Noise and Interference power spectral density), RSRP (Reference Signal Received Power) or the like. The measured received quality is converted into an appropriate metric. The metric may be, for example, the Channel Quality Indicator (CQI) obtained by appropriately quantizing the SINR. Alternatively, another metric may be derived and used, indicating the propagation loss obtained by averaging the measured instantaneous received quality. The propagation loss or a path loss may not follow the instantaneous fading, but may be influenced by distance attenuation or shadowing. Path loss may be expressed by using the CQI. Generally, the path loss value in uplink is similar to that in the corresponding downlink.

In step S5, the metric measured in step S3 is reported to the base station. The metric to be reported may include not only a "base station metric" but also a "relay station metric", the "base station metric" indicating radio propagation conditions between the base station and the user equipment (UE) terminal, the "relay station metric" indicating radio propagation conditions between the relay station and the user equipment (UE) terminal. In the present embodiment, the relay station metric includes a first relay station metric and a second relay station metric corresponding to the first relay station and the second relay station, respectively.

In step S7, an Uplink-Reference Signal (UL-RS) is transmitted from the user equipment (UE) terminal to the base station. In this case, the Uplink-Reference Signal (UL-RS) may be transmitted directly to the base station or may be transmitted via the relay station.

In step S9, the base station measures the received quality of the Uplink-Reference Signal (UL-RS) received by the base station. This measurement may be performed similar to that in step S3. The measured value is converted into some kind of metric. In this embodiment, the converted metric is assumed to be an instantaneous metric indicating instantaneous received qualify.

In step S11, based on at least one of the metric (such as the CQI) reported from the user equipment (UE) terminal and the instantaneous metric, the relay operations of one or more relay stations for the user equipment (UE) terminal is determined; as a result, relay information is generated.

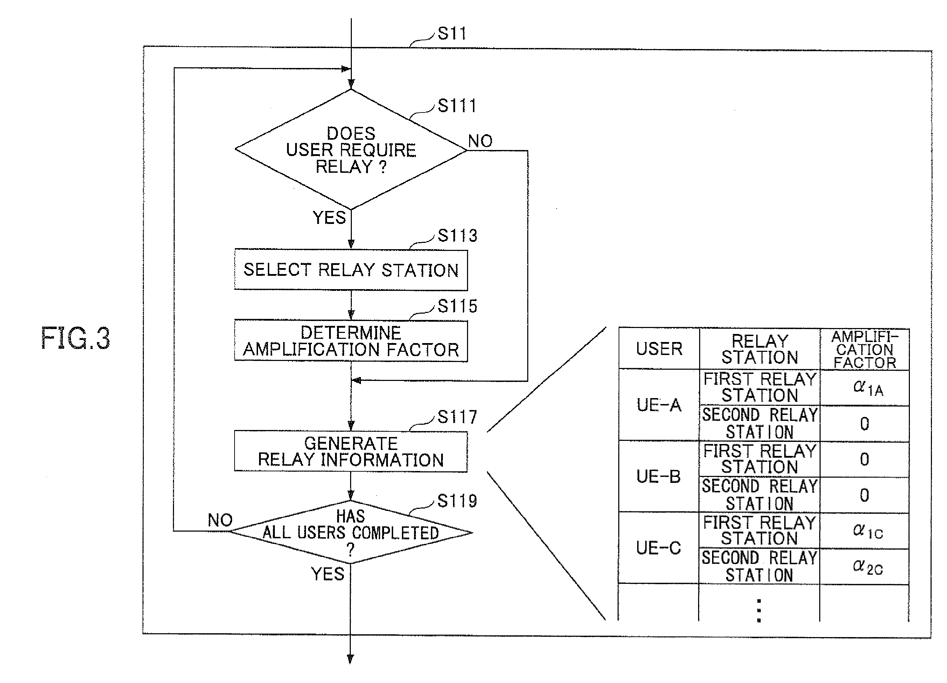

FIG. 3 shows details of step S11. As shown in FIG. 3, first, in step S111, it is determined whether a relay is required to be performed for a specific user equipment (UE) terminal.

For example, when such a metric as the path loss value reported from the user equipment (UE) terminal to the base station is equal to or greater than a predetermined threshold value, the uplink signal from the user equipment (UE) terminal may be determined to be relayed. On the other hand, when determining that the path loss value is less than the predetermined threshold value, it may be determined that the uplink signal from the user equipment (UE) terminal doe not need to be relayed. In the latter case, the relay may be prohibited, or the relay may be allowed. From the viewpoint of reducing the number of the relay stations, the relay may be prohibited. However, when there are surplus system resources (radio resources) or especially when a high quality transmission is required, the relay may be incidentally performed. Further, the metric may be expressed by any appropriate amount (value) other than path loss value.

Otherwise, when the instantaneous metric (e.g., measured instantaneous SINR of the uplink signal) reported from the user equipment (UE) terminal to the base station is less than a predetermined threshold value, it may be determined that the uplink signal from the user equipment (UE) terminal is required to be relayed. On the other hand, when determining that the instantaneous metric is equal to or greater than the predetermined threshold value, it may be determined that the uplink signal from the user equipment (UE) terminal is not to be relayed.

However, the criteria used for determining whether the relay is required to be performed are not limited to the above, and any other appropriate criteria may be used for the determination. For example, whether the relay is required to be performed may be determined based on a geographic location or a positional relationship besides the received quality, or may be determined according to the wishes of the operator or the user.

When determining that the relay is not required to be performed (NO in step S111), the process goes to step S117. On the other hand, when determining that the relay is required to be performed (YES in step S111), the process goes to step S113.

In step S113, it is determined which relay station among one or more relay stations should perform the relay on the uplink signal from the user equipment (UE) terminal (i.e. a relay station to perform the relay is selected).

In this case, for example, the relay station to perform the relay may be determined by comparing the path loss values of the relay stations reported from the user equipment (UE) terminal (i.e., the relay station metrics) and selecting the relay station having the minimum path loss value. As a result, the selected relay station relays the uplink signal from the user equipment (UE) terminal, and the rest of the relay stations do not relay the uplink signal.

Otherwise, one or more relay stations to perform the relay may be determined by comparing the path loss values of the relay stations reported from the user equipment (UE) terminal (i.e., the relay station metrics) and selecting one or more relay stations having the path loss values equal to or less than a predetermined value. As a result, the selected one or more relay stations relay the uplink signal from the user equipment (UE) terminal, and the rest of the relay stations do not relay the uplink signal. Otherwise, it may be determined that a predetermined number of relay stations having lower path loss values compared with the rest of the relay stations are selected, and the selected predetermined number of relay stations relay the uplink signal from the user equipment (UE) terminal, and the rest of the relay station do not relay the uplink signal.

The criteria of selecting the relay stations to relay the uplink signal are not limited to the above examples, and any other criteria may be used to determine the relay station to relay the uplink signal.

In step S115, when the uplink signal of the user equipment (UE) terminal is to be relayed, it is determined how much the uplink signal is to be amplified.

For example, the uplink signal may be amplified using an amplification factor proportional to the path loss value between the relay station to perform the relay and the user equipment (UE) terminal. When the path loss value is small, the distance between the relay station and the user equipment (UE) terminal is relatively small. Therefore, the uplink signal may not be significantly attenuated, and a small amplification factor may be enough. On the other hand, when the path loss value is large, the distance between the relay station and the user equipment (UE) terminal may be relatively large. Therefore, the uplink signal may be significantly attenuated, and a large amplification factor may be required.

Otherwise, the relay station may amplify the uplink signal by using the amplification factor proportional to the reciprocal of the instantaneous RSRP (Reference Signal Received Power) measured by the base station or the relay station. When the instantaneous received power is small, the uplink signal may be significantly attenuated. In this case, a large amplification factor may be required. On the other hand, when the instantaneous received power is large, the uplink signal may not be significantly attenuated. In this case, a small amplification factor may be enough.

The criteria for determining the amplification factor are not limited to the above examples, and any other criteria may be used for determining the amplification factor. For example, the amplification factor based on the path loss value and the amplification factor based on the RSRP may be used in combination.

Next, in step S117, the relay information is generated for the user equipment (UE) terminal. The relay information may be expressed by setting (using) the corresponding amplification factor for each of one or more relay stations. For the user equipment (UE) terminal for which it is determined that the relay is not required (NO in step S111), all the amplification factors of the relay stations are determined (set) to be zero. In the example of FIG. 3, it is determined that the uplink signal from the user equipment (UE) terminal A (UE-A) is to be amplified and relayed by using the amplification factor α_{1A} by the first relay station, but is not to be amplified nor relayed by the second relay station.

Further, it is determined that the uplink signal from the user equipment (UE) terminal B (UE-B) is not to be amplified nor relayed by any of the relay stations.

Further, it is determined that the uplink signal from the user equipment (UE) terminal C (UE-C) is to be amplified and relayed by using the amplification factors α_{1C} and α_{2C} by the first relay station and the second relay station, respectively.

The expression of (contents or data in) the relay information shown in FIG. 3 is an example only, and any other appropriate expression may be used.

In step S119, it is determine whether the relay information has been generated for all the user equipment (UE) terminals to be considered. When determining that there is any user equipment (UE) terminal remaining to be considered (determined) in this process (NO in step S119), the process goes back to step S111 to repeat the process described above. On the other hand, when determining that the relay information is generated for all the user equipment (UE) terminals to be considered, the process goes to step S13 in FIG. 2.

In step S13, uplink scheduling and downlink scheduling are performed to determine the respective allocation plans (scheduling) of the radio resources. The uplink and downlink scheduling are expressed in the uplink scheduling information and the downlink scheduling information, respectively. Typically, in the uplink and downlink scheduling information, information items such as the user ID, resource blocks, transmission format (data modulation method and channel coding method (or data size)), transmission power value and the like may be designated. For example, when the SC-FDMA (Single Carrier-Frequency Division Multiple Access) scheme is employed, the allocated resource blocks are restricted to have consecutive frequency bands. In this case, the resource blocks may be designated by designating the first resource block and the number of the following resource blocks.

The scheduling may be determined based on instantaneous radio propagation conditions. For example, the scheduling may be determined by comparing the instantaneous SINRs (Maximum CI method) or may be determined by comparing the values obtained by dividing the instantaneous SINRs by the corresponding average SINRs (Proportional fairness method).

When the base station performs the uplink scheduling, whether the uplink signal from the user equipment (UE) terminal is to be relayed may be additionally considered or may be neglected. For example, when the uplink signal is to be relayed by a relay station (e.g., when the user equipment (UE) terminal is located at the edge of the cell), the radio propagation conditions between the base station and the user equipment (UE) terminal may not be very good. In such a case, a relatively small number of resource blocks are likely to be allocated to the user equipment (UE) terminal (this decision is made by practically assuming that the uplink signal is not to be relayed). However, if it is assumed that the uplink signal is to be relayed by a relay station, it may become possible that more resource blocks are allocated to the user equipment (UE) terminal. In other words, when assuming that the relay is to be performed, many radio resources may be allocated to even the user equipment (UE) which is located at the edge of the cell, so that the user equipment (UE) terminal at the edge of the cell may perform high-speed and large-capacity signal transmission to the base station. In this case, not only the number of resource blocks but also an MCS number (i.e., an index designating the transmission format) of the Adaptive Modulation and Coding (AMC) scheme or the transmission power value may be changed (adjusted). For example, when assuming that the relay is not to be performed, only an MCS number for lower transmission rates can be generally used by (allocated to) the user equipment (UE) terminal having poor channel conditions. However, when assuming that the relay is to be performed on the uplink signal from the user equipment (UE) terminal, an MCS number for higher transmission rates can be used by the user equipment (UE) terminal. Similarly, when assuming that the relay is not to be performed, the user equipment (UE) having poor channel conditions may have to increase the transmission power level. However, when assuming that the relay is to be performed, the transmission power may be maintained at a low level. By appropriately performing the relay, it may become possible to increase the coverage of the base station.

Next, in step S15, a downlink control signal including at least one of the uplink scheduling information and the downlink scheduling information is transmitted from the base station. The downlink control signal may be, for example, a Physical Downlink Control CHannel (PDCCH). The PDCCH may or may not include the relay information described above. When not included in the PDCCH, the relay information may be included in another channel. Otherwise, the relay information may not be explicitly transmitted. In other words, the relay information may or may not be explicitly transmitted to the user equipment (UE) terminal.

When the relay information is included in the downlink control signal (or when the relay information is transmitted using another channel), each relay station extracts the uplink scheduling information from the downlink control signal, and obtains the relay information (steps S17 and S19). By reading the uplink scheduling information, each relay station obtains the information indicating which resource blocks and which transmission formats are allocated to which user equipment (UE) terminals in the next uplink sub-frame. Further, by reading the relay information, each relay station obtains the information indicating whether the own relay station should relay the uplink signals from the user equipment (UE) terminals. In a case where the relay station is not required to relay any uplink signal from the user equipment (UE) terminals in the next sub-frame, the relay station may wait until receiving the next downlink control signal. On the other hand, when a relay station obtains the information to relay an uplink signal, the relay station may prepare for the relay. In the example of FIG. 3, the first relay station amplifies and relays the uplink signals from the user equipment (UE) terminals A and C (UE-A and UE-C) by using the amplification factors α_{1A} and α_{1C}, respectively. In this case, which resource blocks are used by the user equipment (UE) terminals A and C (UE-A and UE-C) are described in the uplink scheduling information. Further, the second relay station amplifies and relays the uplink signal from the user equipment (UE) terminal C (UE-C) by using the amplification factor α_{2C}. In this case, which resource blocks are used by the user equipment (UE) terminal C (UE-C) are described in the uplink scheduling information. As described above, by reading the uplink schedule information and the relay information, the relay stations may obtain explicit information indicating how the uplink signals are to be relayed or that no relay is required to be performed.

In step S21, the user equipment (UE) terminals read (extract) the scheduling information from the downlink control signal to prepare for the uplink transmission in the next sub-frame. However, in the present invention, it is not essential that the user equipment (UE) terminal reads the relay information.

In step S23, the user equipment (UE) terminals transmit the uplink signals based on the uplink scheduling information. Typically, the uplink signal may be user traffic data such as the Physical Uplink Shared CHannel (PUSCH). However, besides the PUSCH, any other appropriate signal such as the Physical Uplink Control CHannel (PUCCH) may be used. The PUCCH may include control information items which are not accompanied by the PUSCH, the information items including, for example, the received quality (CQI) of the downlink reference signal, the Acknowledge/Non-Acknowledge information (ACK/NACK) of the Physical Downlink Shared CHannel (PDSCH) received before (in the preceding sub-frame) and the like. In any case, the user equipment (UE) terminals transmit any kind of uplink signal.

The first relay station amplifies the uplink signal having the frequency (resource block) allocated to the user equipment (UE) terminal A (UE-A) by using the amplification factor α_{1A}, and transmits the amplified uplink signal. Further, the first relay station amplifies the uplink signal having the frequency (resource block) allocated to the user equipment (UE) terminal C (UE-C) by using the amplification factor α_{1C}, and transmits the amplified uplink signal.

The second relay station amplifies the uplink signal having the frequency (resource block) allocated to the user equipment (UE) terminal C (UE-C) by using the amplification factor α_{2C}, and transmits the amplified uplink signal.

However, it is not essential that the first and second relay stations relay the uplink signal from the user equipment (UE) terminal B (UE-B). This is derived from the assumption that the amplification factors for the user equipment (UE) terminal UE-B are set to be zero (as shown in FIG. 3). In this case, the amplification and transmitting of the uplink signal from the user equipment (UE) terminal may be or may not be prohibited. Generally, when the relay is performed, the use efficiency of the resources is reduced (because different resources are required to be used for the receiving and for transmitting the signal in the relay station). From the viewpoint of reducing the number of relay stations, it may be preferable to prohibit the unnecessary relay as much as possible. However, when there are surplus system resources, or especially when high quality transmission is required, it may be preferable that the relay is willfully performed in the relay station which is not essentially required to perform the relay.

On the other hand, when the relay information is not included in the downlink control signal, the relay stations may not obtain the explicit information indicating which signal from which user equipment (UE) terminal is to be relayed and how the signal is to be processed (e.g. amplified). In this case, the relay stations may determine whether the relay is to be performed by the relay stations by using the uplink scheduling information. For example, the relay stations may determine to relay the uplink signals from the user equipment (UE) terminal when detecting that the user equipment (UE) terminal uses a smaller number of radio resources or is using the MCS number for lower transmission rates and not to relay the uplink signals from the rest of the user equipment (UE) terminals. Further, the amplification factors used for the relays may be calculated in the relay stations. This calculation of the amplification factors may be performed by the relay stations regardless of whether the relay information is included in the downlink control signal. When it is assumed that the relay stations independently determine how the relay is to be performed based on the uplink scheduling information as described above, it may be necessary for the base station to perform the scheduling without assuming that the uplink signals are to be relayed.

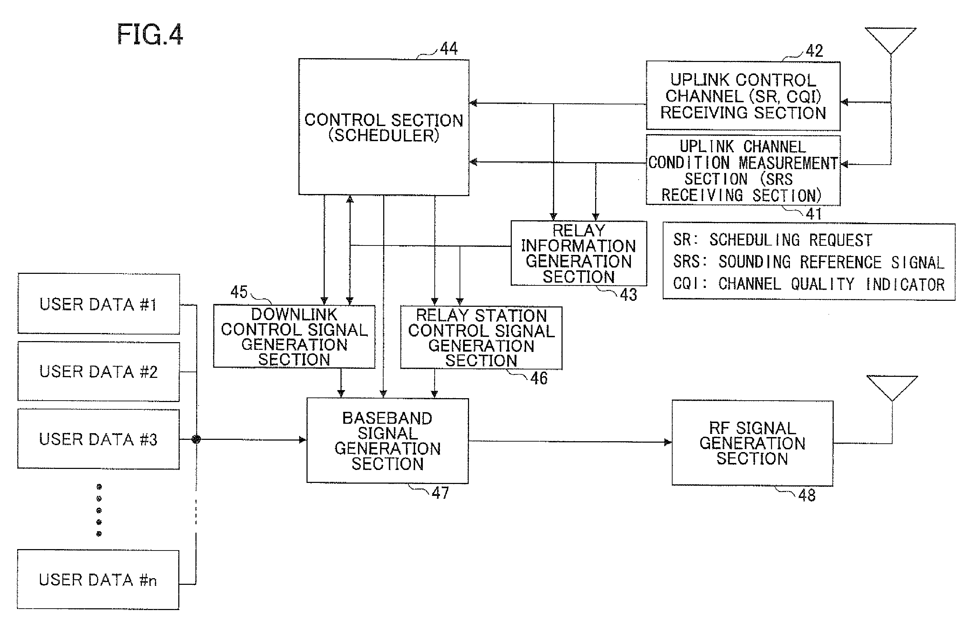

FIG. 4 is a partial functional block diagram of the base station according to an embodiment of the present invention. As shown in FIG. 4, the base station includes an uplink channel condition measurement section 41, an uplink control channel receiving section 42, a relay information generation section 43, a scheduler 44 a downlink control signal generation section 45, a relay station control signal generation section 46, a baseband signal generation section 47 and an RF signal generation section 48.

The uplink channel condition measurement section 41 receives the reference signal transmitted from the user equipment (UE) terminal, and measures uplink channel conditions. As the reference signal, generally, the Sounding Reference Signal (SRS) periodically transmitted from the user equipment (UE) terminal across the entire system frequency range may be used. Further, for example, other reference signal for decoding transmitted in a specific frequency range may be additionally used. The channel conditions may be expressed by the received quality of the reference signal. The received quality may be expressed by the SINR, Ec/No, RSRP, or the like. In addition to measure the instantaneous values, the average value of the measured instantaneous values may be calculated.

The uplink control channel receiving section 42 receives a control channels from the user equipment (UE) terminal. The control channel may include, for example, the Scheduling Request (SR) and the amount indicating the downlink received quality (e.g., CQI) or the like. These values such as the CQI may similarly include not only the instantaneous values but also the average values. Further, not only the amount indicating the channel conditions between the base station and the user equipment (UE) terminal but also that between the relay station and the user equipment (UE) terminal may be reported to the base station.

The relay information generation section 43 generates the relay information for each user equipment (UE) terminal based on at least one of the downlink CQI and the uplink received SINR or the like. The generated relay information is reported to the scheduler 44 and the downlink control signal generation section 45. However, as described above, it is not essential that the relay information be included in the downlink control signal. Further, when the scheduling is performed without assuming that the uplink signals are to be relayed, the relay information may not be reported to the scheduler 44.

The scheduler 44 performs the uplink scheduling and the downlink scheduling to determine the respective allocation plans (scheduling) of the radio resources. The determined allocation plans (scheduling) are reported to the downlink control signal generation section 45 as the uplink scheduling information and/or the downlink scheduling information.

The downlink control signal generation section 45 provides the downlink control signal to be reported to the user equipment (UE) terminal. The downlink control signal includes the uplink scheduling information and/or the downlink scheduling information, and further includes the relay information on an as-needed basis.

The relay station control signal generation section 46 generates a relay station control signal to be used for transmitting the relay information separately from the transmission of the uplink and downlink scheduling information.

The baseband signal generation section 47 generates a baseband signal including various control information items and user data to be included in the downlink signal.

The RF signal generation section 48 converts the baseband signal into a transmission signal for wireless transmission.

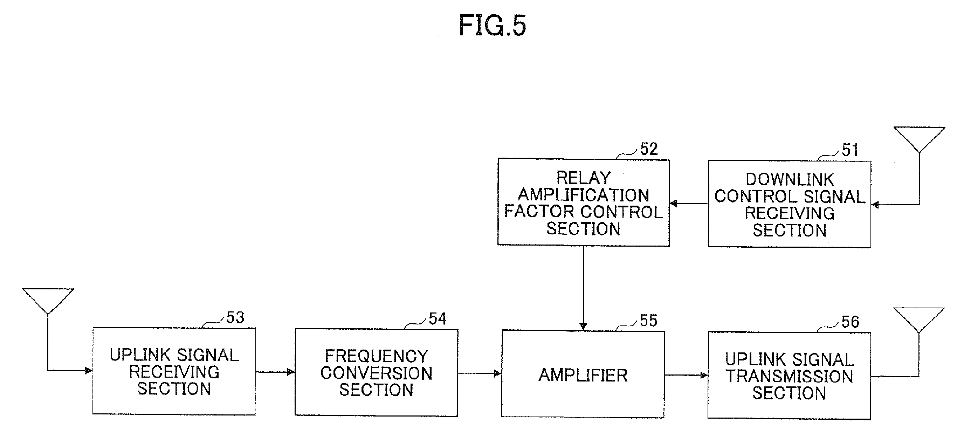

FIG. 5 is a partial function block diagram of the relay station according to an embodiment of the present invention. As shown in FIG. 5, the relay station includes a downlink control signal receiving section 51, a relay amplification factor control section 52, an uplink signal receiving section 53, a frequency conversion section 54, an amplifier 55, and an uplink signal transmission section 56.

The downlink control signal receiving section 51 receives the downlink control signal. When the relay station is not transmitted in the downlink control signal, the downlink control signal receiving section 51 further receives the relay station control signal. The downlink control signal receiving section 51 demodulates the downlink control signal, and reads (extracts) the uplink scheduling information and the relay information.

The relay amplification factor control section 52 controls (determines) the amplification factor to be used to amplify the uplink signal from the user equipment (UE) terminal based on the information read from the downlink control signal. The determined amplification factor is reported to the amplifier 55 using an instruction signal.

The uplink signal receiving section 53 receives the uplink signal from the user equipment (UE) terminal.

The frequency conversion section 54 converts the frequency of the received signal into the frequency for the transmission signal. FIG. 5 shows a case where the received frequency is different from the transmission frequency when the relay station performs the relay. When the same frequency is used and alternatively time slots and/or codes and the like are changed to perform the relay, this frequency conversion section 54 may not be necessary.

The amplifier 55 amplifies the uplink signal to be relayed. The amplification factor is controlled from the relay amplification factor control section 52 using the instruction signal.

The uplink signal transmission section 56 transmits the amplified uplink signal in uplink.

It is not essential but it may be preferable that the directionality of the antenna for receiving the uplink signal differs from that for transmitting the uplink signal in the relay station. For example, the directionality of the antenna for receiving the uplink signal may be directed to the edge of the cell and the directionality of the antenna for transmitting the uplink signal may be directed to the base station.

The present invention is described above by referring to a specific embodiment. However, a person skilled in the art may understand that the above embodiment is described for illustrative purpose only and may think of examples of various modifications, transformations, alterations, changes, and the like. To promote an understanding of the present invention, the specific values are used as examples throughout the description. However, it should be noted that such specific values are just sample values unless otherwise described, and any other values may be used. Further, it should be noted that the division of the embodiments and the items is not essential to the present invention. For example, two or more embodiments or items may be combined on an as-needed basis, and an item described in an embodiment or an item may be applied to another embodiment or item as long as it is not contradictory. For illustrative purposes, the apparatus according to an embodiment of the present invention is described with reference to the functional block diagram. However, such an apparatus may be provided by hardware, software, or a combination thereof. The present invention is not limited to the embodiment described above, and various modifications, transformations, alteration, exchanges, and the like may be made without departing from the scope and spirit from the present invention.

The present international application claims priority from Japanese Patent Application No. 2008-15494 filed on January 25, 2008, the entire contents of which are hereby incorporated herein by reference.

## Claims

1. A base station used in a relay transmission system, the base station comprising:
a metric provision unit configured to provide a metric indicating radio propagation conditions of a user equipment terminal;
a relay information generation unit configured to generate relay information for the user equipment terminal based on the metric, the relay information indicating whether an uplink signal is to be transmitted via one or more relay stations;
a scheduling unit configured to generate an allocation plan of radio resources based on the relay information; and
a control signal transmission unit configured to transmit a control signal including scheduling information indicating the allocation plan.

2. The base station according to claim 1, wherein
the relay information is included in the control signal.

3. The base station according to claim 2, wherein
the metric is derived from a received quality of a reference signal transmitted in downlink.

4. The base station according to claim 2, wherein
the metric is derived from a received quality of a reference signal transmitted from the user equipment terminal.

5. The base station according to claim 3, wherein
the metric includes a base station metric and a relay station metric, the base station metric being derived from a received quality of a reference signal transmitted from the base station, the relay station metric being derived from a received quality of a reference signal transmitted from the relay station.

6. The base station according to claim 5, wherein
whether an uplink signal from the user equipment terminal is to be relayed is determined depending on whether the base station metric is equal to or greater than a predetermined value.

7. The base station according to claim 3, wherein
a path loss value between the relay station and the user equipment terminal is measured, and
the relay information is generated in a manner such that the uplink signal is to be relayed by a relay station having a minimum path loss value.

8. The base station according to claim 7, wherein
the relay information is generated in a manner such that the uplink signal is to be relayed by one or more relay stations having a path loss value equal to or less than a predetermined value.

9. The base station according to claim 8, wherein
the relay information indicates that the relay station for relaying the uplink signal amplifies the uplink signal by using an amplification factor determined in accordance with the path loss value between the relay station and the user equipment terminal.

10. The base station according to claim 8, wherein
the relay information indicates that the relay station for relaying the uplink signal amplifies the uplink signal by using an amplification factor proportional to a reciprocal of a received power value of the uplink signal.

11. A method used in a base station of a relay transmission system, the method comprising:
a metric providing step of providing a metric indicating radio propagation conditions of a user equipment terminal;
a relay information generating step of generating relay information for the user equipment terminal based on the metric, the relay information indicating whether an uplink signal is to be transmitted via one or more relay stations;
a scheduling step of generating an allocation plan of radio resources based on the relay information; and
a control signal transmitting step of transmitting a control signal including scheduling information indicating the allocation plan.

12. A relay station used in a relay transmission system, the relay station comprising:
a receiving unit configured to receive an uplink signal from a user equipment terminal;
an amplification unit configured to amplify the uplink signal based on an instruction signal;
a transmission unit configured to transmit the uplink signal in uplink, the uplink signal having been amplified by the amplification unit;
a demodulation unit configured to receive and demodulate a control signal including scheduling information of uplink radio resources; and
an instruction signal generation unit configured to generate the instruction signal by determining whether the uplink signal is required to be relayed for the user equipment terminal based on the control signal, wherein
the instruction signal indicates whether the uplink signal is to be amplified depending on whether the uplink signal is required to be relayed.

13. The relay station according to claim 12, wherein
a relay information is included in the control signal, the relay information indicating whether an uplink signal is to be transmitted via one or more of the relay stations.

14. The relay station according to claim 13, wherein
whether the uplink signal from the user equipment terminal is required to be relayed is determined based on how radio resources are allocated to the user equipment terminal.

15. The relay station according to claim 13, wherein
when the uplink signal is relayed, the uplink signal is amplified by using an amplification factor determined based on a path loss value of the relay station.

16. The relay station according to claim 13, wherein
when the uplink signal is relayed, the uplink signal is amplified by using an amplification factor proportional to a reciprocal of a received power value of the uplink signal.

17. The relay station according to claim 12, wherein
a directionality of an antenna for receiving the uplink signal is different from a directionality of an antenna for transmitting the uplink signal.

18. A method used in a relay station in a relay transmission system, the method comprising:
a receiving step of receiving an uplink signal from a user equipment terminal;
an amplifying step of amplifying the uplink signal based on an instruction signal; and
a transmitting step of transmitting the uplink signal in uplink, the uplink signal having been amplified in the amplifying step, wherein
a control signal including scheduling information of uplink radio resources is received and demodulated,
the instruction signal is generated by determining whether the uplink signal is required to be relayed for the user equipment terminal based on the control signal, and
the instruction signal indicates whether the uplink signal is to be amplified depending on whether the uplink signal is required to be relayed.

19. A relay transmission system including one or more user equipment terminals, one or more relay stations, and a base station,
the base station comprising:
a metric provision unit configured to provide a metric indicating radio propagation conditions of each of the user equipment terminals;
a relay information generation unit configured to generate relay information for each of the user equipment terminals based on the corresponding metric, the relay information indicating whether an uplink signal is to be transmitted via one or more of the relay stations;
a scheduling unit configured to generate an allocation plan of radio resources based on the relay information; and
a control signal transmission unit configured to transmit a control signal including scheduling information indicating the allocation plan,
at least one of the relay stations comprising
a receiving unit configured to receive an uplink signal from one of the user equipment terminals;
an amplification unit configured to amplify the uplink signal based on an instruction signal;
a transmission unit configured to transmit the uplink signal in uplink, the uplink signal having been amplified by the amplification unit;
a demodulation unit configured to receive and demodulate a control signal including scheduling information of uplink radio resources; and
an instruction signal generation unit configured to generate the instruction signal by determining whether the uplink signal is required to be relayed for the one of the user equipment terminals based on the control signal, wherein
the instruction signal indicates whether the uplink signal is to be amplified depending on whether the uplink signal is required to be relayed.
